# EUROPÄISCHE PATENTANMELDUNG

(11) **EP 0 588 144 A1**
(43) Veröffentlichungstag der Anmeldung: **23.03.1994**
(21) Anmeldenummer: 93113876.2
(22) Anmeldetag: 31.08.1993
(51) Int. Cl.: B07C 5/36, B65G 47/54

(54) **Sortiermaschine mit Fördereinrichtungen**

(30) Priorität: 18.09.1992 IT MI922145
(71) Anmelder: ALCATEL ITALIA S.p.A., I-20158 Milano (IT)
(72) Erfinder: Passero, Adolfo, I-81110 Caserta (IT)
(74) Vertreter: Pohl, Herbert, Dipl.-Ing

(57) **Zusammenfassung**

Die Erfindung bezieht sich auf eine Sortiermaschine mit Fördereinrichtungen.

Sie enthält einen verstellbaren Rahmen mit Sortiermitteln und Verstellmitteln zum Verstellen des Rahmens in der Weise, daß die Sortiermittel eine geneigte Lage zur Förderebene einnehmen und teilweise über die Förderebene hinausragen.

## Beschreibung

Die Erfindung betrifft eine Sortiermaschine mit Fördereinrichtungen, bei weicher in Förderrichtung zwischen zwei Fördereinrichtungen eine Sortierstation angeordnet ist, welche wenigstens eine sich im wesentlichen quer zu den Förderbändern erstreckende Sammeleinrichtung aufweist, bei welcher an der Sortierstation Transportmittel vorgesehen sind, die eine Trag- und eine Bewegungsebene für das in Fördereinrichtung zur transportierende Fördergut bilden und bei der nahe den Transportmitteln angeordnete Sortiermittel zur Übergabe des Fördergutes an die Sammeleinrichtung vorgesehen sind.

Es ist bekannt, daß bei Sortiermaschinen, bei denen die Fördereinrichtungen aus Riemenförderern oder Rollenförderern bestehen, Sortierstationen vorhanden sind, welche durch elektronische oder manuelle Steuerung die individuelle Umleitung eines Fördergutes aus einer Hauptförderrichtung in eine andere Richtung oder in einen Sammelbehälter gestatten. Das Fördergut kann auch von einer Förderrichtung auf eine andere Förderrichtung übergeben werden.

Bei den bekannten Sortiermaschinen sind verschiedene Ausführungsformen bekannt. Bei einer bekannten Ausführungsform bestehen die Fördereinrichtungen aus endlosen parallel und mit Abstand zueinander in der Hauptförderrichtung angeordneten Riemen, so daß sie eine Trage- und Transportebene für das Fördergut bilden.

Die Sortiermittel enthalten eine Vielzahl von Walzen, welche gemeinsam drehbar angetrieben in dem Zwischenraum zwischen den Transportriemen derart angeordnet sind, daß ihre Drehachsen in der gleichen Ebene und parallel zur Förderrichtung verlaufen.

Die Walzen sind drehbar auf einem beweglichen Rahmen angeordnet; dabei bilden die Oberflächen der Walzen eine Tragebene. In der abgesenkten Lage des Rahmens befindet sich die Tragebene geringfügig unterhalb der Transportebene, welche von den Förderbändern gebildet wird. Die Walzen können aus der abgesenkten Lage in eine angehobene Lage gebracht werden, so daß die Tragebene der Walzen danach über der Transportebene der Förderbänder liegt.

In der Praxis muß ein Fördergut, welches in der Sortiermaschine behandelt werden soll, an der Sortierstation durch eine anhebbare Schiene am Ende der Sortierstation angehalten werden. Anschließend wird der Rahmen mit den Walzen angehoben, wodurch auch das Fördergut von der Fördereinrichtung abgehoben wird. Die in der gewünschten Richtung rotierenden Walzen überführen das Fördergut quer zur Hauptförderrichtung zu einem Sammelbehälter oder einer anderen Fördereinrichtung.

Bei einer anderen bekannten Sortiermaschine bestehen die Fördereinrichtungen aus drehbaren Walzen, deren Längsachsen im rechten Winkel zur Förderrichtung angeordnet sind, und die Sortiermittel bestehen aus an einem beweglichen Rahmen geführten Riemen, welche zwischen den Walzen angeordnet sind. Die Riemen sind geringfügig über die Walzen anhebbar, um das Fördergut zu einer seitlich angeordneten Sammeleinrichtung abzulenken, in ähnlicher Weise wie es im Zusammenhang mit der ersten bekannten Sortiermaschine schon beschrieben worden ist.

Bei einer dritten bekannten Sortiermaschine sind die Sortiermittel nicht über die Fördereinrichtung anhebbar, sondern sie bestehen aus Stößeln, welche zwischen den Riemen oder Ketten hindurch bewegt werden können. Wenn sie gleichzeitig quer zur Hauptförderrichtung betätigt werden, können sie das Fördergut in einen Sammelbehälter stoßen.

Die vorstehend beschriebenen Sortiermaschinen weisen noch einige Unzulänglichkeiten und Nachteile auf. Wenn ein Fördergut aus der Hauptförderrichtung abgeleitet werden soll, dann wird das Fördergut an der Sortierstation angehalten. Das danach herangebrachte Fördergut, welches entweder in der Hauptförderrichtung weitergefördert oder abgeleitet werden soll, kann erst nach Abschluß der Behandlung des vorhergehenden Fördergutes behandelt werden.

Aus diesem Grund können die Zeitabstände zwischen der Behandlung von zwei aufeinanderfolgenden Fördergütern nicht beliebig verkleinert werden, so daß die auf diese Weise erzielten Sortierraten oft nicht ausreichend sind um den Anforderungen zu entsprechen.

Es sind schon Versuche unternommen worden, um die erwähnten Nachteile dadurch zu vermeiden, daß die Sortiereinrichtung in eine Mehrzahl von hintereinander angeordnete Gruppen von Sortierstationen unterteilt und eine hebbare Stopschiene hinter einer jeden Sortierstation angeordnet ist. Bei einer solchen Vorrichtung ist es möglich, während ein Fördergut in der einen Sortierstation behandelt wird, ein anderes Fördergut in einer davor liegenden Sortierstation in gleicher Weise zu behandeln, wodurch sich eine Beschleunigung des Sortiervorganges ohne unerwünschte Wartezeiten ergibt.

Aber auch bei dieser bekannten Sortiermaschine ist eine Erhöhung der Sortierraten davon abhängig, in welcher Reihenfolge die Fördergüter angeliefert werden, d.h. wenn das erste angelieferte Fördergut an der am weitesten entfernten Sortierstation behandelt werden soll und die darauf folgenden Fördergüter an den davor liegenden Sortierstationen. Nur unter dieser Voraussetzung ist es möglich, aufeinanderfolgende Sortiervorgänge in kurzen Abständen und die gleichen Vorgänge gleichzeitig durchzuführen. In allen anderen Fällen ist es nicht möglich, die Sortierraten zu erhöhen, weil der eine Vorgang erst beendet sein muß bevor der nächste ausgeführt werden kann.

Eine andere Unzulänglichkeit von allen bekannten Sortiermaschinen besteht darin, daß das Fördergut bei der Behandlung in der Sortierstation eine andere Orientierung erhält, d.h. die vorherigen Seitenflächen sind dann die Endflächen und umgekehrt. Dadurch können sich einige Nachteile ergeben. Beispielsweise kann es Schwierigkeiten beim Erkennnen der Strichkode geben, welche auf dem Fördergut angebracht ist. Darüberhinaus spielen auch die Längenabmessungen des Fördergutes eine Rolle, insbesondere wenn die Länge des Fördergutes sehr viel größer als seine Breite ist. Solche Fördergüter können auf den bekannten Sortiermaschinen nur behandelt werden, wenn die Fördereinrichtungen über entsprechende Abmessungen verfügen.

Das der Erfindung zugrunde liegende technische Problem besteht deshalb darin, eine Sortiermaschine zu schaffen, bei welcher die vorstehend erwähnten Nachteile nicht vorhanden sind. Insbesondere soll eine Sortiermaschine geschaffen werden, welche es gestattet, die Sortiergeschwindigkeit und die mit der gleichen Fördereinrichtung beförderte Fördergut-Menge beträchtlich zu erhöhen.

Die neue Sortiermaschine soll außerdem in der Weise beschaffen sein, daß das Fördergut seine Orientierung beibehält, wenn es im rechten Winkel zur Hauptförderrichtung abgelenkt wird.

Dieses technische Problem ist erfindungsgemäß durch einen verstellbaren Rahmen für die Sortiermittel gelöst, mit welchem in der Weise steuerbare Verstellmittel verbunden sind, daß die Sortiermittel aus einer abgesenkten Lage unterhalb der Transportebene einseitig in eine teilweise oberhalb der Transportebene liegende schräge Lage anhebbar sind.

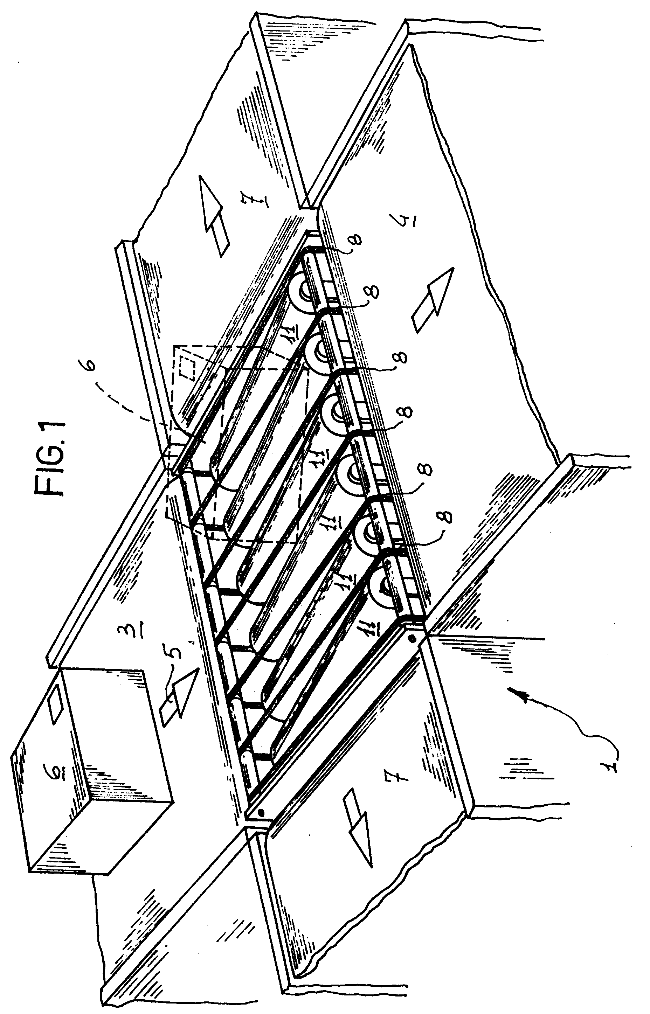

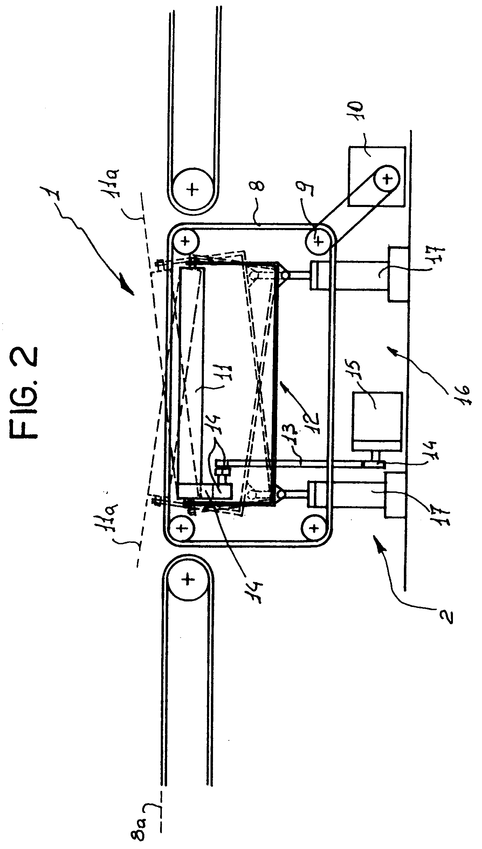

Vorteilhafte Einzelheiten der Erfindung sind in den Ansprüchen 2 und 3 enthalten. Sie ist nachstehend anhand der Figuren 1 und 2 beschrieben. Es zeigen:
- Fig. 1: in perspektivischer Darstellung ein Ausführungsbeispiel der erfindungsgemäßen Sortierstation und
- Fig. 2: die Seitenansicht der Sortierstation gemäß Fig. 1.

Die Sortiermaschine 1 enthält die Sortierstation 2, welche zwischen den miteinander und mit der Förderrichtung 5 fluchtenden Fördereinrichtungen 3 und 4 angeordnet ist. Die Förderrichtung 5 ist die Hauptförderrichtung für die Fördergüter 6. Rechtwinklig zu den Fördereinrichtungen 3 und 4 und anschließend an die Sortierstation 2 sind die Sammeleinrichtungen 7 angeordnet, welche bei dem gezeigten Ausführungsbeispiel als Förderbänder ausgebildet sind.

Die Sortierstation 2 enthält Transportmittel 8, welche aus parallel zueinander angeordnete endlose, in Förderrichtung 5 verlaufende Riemen besteht. Sie sind über Walzen 9 geführt, welche von einem Motor 10 antreibbar sind.

Die Transportmittel 8 bilden eine Trage- und Transportebene 8a für das Fördergut 6 in Förderrichtung und fluchten mit den entsprechenden Ebenen der Fördereinrichtungen 3 und 4.

In den Zwischenräumen zwischen den Transportmitteln 8 sind die Sortiermittel 11 angeordnet, welche aus einer Mehrzahl von Walzen bestehen, deren Drehachsen in Ebenen liegen, welche parallel zur Förderrichtung 5 sind. Die Walzen 11 sind drehbar an einem beweglichen Rahmen 12 befestigt und bilden mit ihrer Oberfläche eine Umleitebene 11a. Sie sind gleichzeitig entweder in der einen oder der anderen Drehrichtung antreibbar. Dazu dient der Antriebsriemen 13, der über eine Riemenscheibe 14 geführt und von einem Motor 15 angetrieben ist.

Der bewegliche Rahmen 12 ist mittels Verstellmitteln 16 am Boden befestigt. Die Verstellmittel 16 sind dafür vorgesehen, um den beweglichen Rahmen aus einer abgesenkten Stellung, in welcher die Umleitebene 11a vollständig unterhalb der Transportebene 8a liegt, in eine Arbeitsstellung zu bringen, in welcher die Umleitebene 11a schräg liegt. Dabei ragt die Umleitebene 11a teilweise über die Transportebene hinaus, so daß die auf der Fördereinrichtung 3 herangebrachten Fördergüter 6 in der einen oder anderen Richtung zu den Sammeleinrichtungen 7 geleitet werden.

Bei den Verstellmitteln 16 handelt es sich um wenigstens einen, vorteilhafterweise jedoch um zwei hydraulische Linearantriebe 17, welche in Förderrichtung 5 hintereinander angeordnet sind.

Der bewegliche Rahmen 12 ist schwenkbar an den Enden der Hubstangen der hydraulischen Linearantriebe befestigt; dabei liegen die Schwenkachsen rechtwinklig zur Förderrichtung 5. Dadurch ist es möglich, durch eine entsprechende Betätigung des einen oder anderen hydraulischen Linearantriebes den beweglichen Rahmen 12 aus der abgesenkten Lage in die Arbeitsstellung zu schwenken. Dabei wird eine schrägstehende Umleitebene 11a im Zuge der Förderrichtung 5 gebildet. Falls das Fördergut 6 in einer zur Förderrichtung 5 entgegengesetzten Förderrichtung befördert wird, kann der bewegliche Rahmen 12 auch eine entsprechende Umleitebene 11a bilden, d.h. durch seine entsprechende Schrägstellung zur neuen Förderrichtung.

Die Arbeitsweise der Sortiermaschine ist nachstehend beschrieben. Wenn ein durch die Fördereinrichtung 3 in Förderrichtung 5 herangeführtes Fördergut 6 abgeleitet werden soll dann wird der bewegliche Rahmen 12 derart an einem Ende angehoben, daß die Walzen 11 teilweise über die Transportebene 8a hinausragen. Sie bilden dadurch die Umleitebene 11a bezüglich der Förderrichtung 5. Wegen der Schräglage der Umleitebene 11a wird, sobald das vordere Ende des Fördergutes 6 die schräggestellten Walzen 11 erreicht, zunächst dieses und danach der restliche Teil des Fördergutes 6 auf einer kurvenförmigen Bahn rechtwinklig abgeleitet. Dabei rotieren alle von einem Motor 15 angetriebenen Walzen 11 in der entsprechenden Richtung. Auf diese Weise behält das von der Fördereinrichtung 3 im rechten Winkel abgeleitete Fördergut 6 seine ursprüngliche Orientierung.

Die erfindunggemäße Vorrichtung weist wichtige Vorteile auf. Ein Vorteil besteht darin, daß der Ablauf des Sortiervorganges mit der verbesserten Sortiermaschine kein plötzliches Anhalten des Fördergutes durch eine Halteschiene und ein Start des Transportes in einer Richtung rechtwinkig zur ursprünglichen Förderrichtung erfordert, sondern daß die Ableitung des Fördergutes aus der ursprünglichen Förderrichtung kontinuierlich erfolgt.

Die Länge der Walzen ist sehr gering (10-15 cm). Sie hängt nicht von den Abmessungen des Fördergutes ab, aber sie hat einen Einfluß auf seine Sortierfähigkeit. Die räumlichen und zeitlichen Abstände zwischen zwei aufeinanderfolgende Fördergüter können beträchtlich verringert werden; sie hängen im wesentlichen von der Zeit ab, welche für das Anheben und das Absenken der Walzen notwendig ist. Dadurch ist die Sortierkapazität der Sortiermaschine wesentlich erhöht.

Darüberhinaus führt das Fehlen des plötzlichen Anhaltens des Fördergutes und der gleichmäßige und kontinuierliche Sortiervorgang zu einer Schonung des Fördergutes, wodurch Beschädigungen desselben vermieden werden.

Da das Fördergut nach dem Passieren der Sortierstation die gleiche Orientierung beibehält, ist es möglich, diese - wenn sie in Längsrichtung transportiert werden - wesentlich schneller zu transportieren. Außerdem werden keine überdimensionierten Förderbänder benötigt.

## Patentansprüche

1. Sortiermaschine mit Fördereinrichtungen, bei welcher in Förderrichtung zwischen zwei Fördereinrichtungen eine Sortierstation angeordnet ist, welche wenigstens eine sich im wesentlichen quer zu den Förderbändern erstreckende Sammeleinrichtung aufweist, bei welcher an der Sortierstation Transportmittel vorgesehen sind, die eine Trag- und eine Bewegungsebene für das in Förderrichtung zur transportierende Fördergut bilden und bei der nahe den Transportmitteln angeordnete Sortiermittel zur Übergabe des Fördergutes an die Sammeleinrichtung vorgesehen sind,
gekennzeichnet durch einen verstellbaren Rahmen (12) für die Sortiermittel (11), mit welchem in der Weise steuerbare Verstellmittel (16) verbunden sind, daß die Sortiermittel (11) aus einer abgesenkten Lage unterhalb der Transportebene (8a) einseitig in eine teilweise oberhalb der Transportebene liegende schräge Lage anhebbar sind.

2. Sortiermaschine nach Anspruch 1,
dadurch gekennzeichnet, daß die Transportmittel (8) aus einer Mehrzahl von parallel zur Förderrichtung angeordneten Antriebsriemen bestehen, welche über von einer Riemenscheibe und einem Riemen angetriebene Walzen (9) geführt und angetrieben sind, und die Sortiermittel (11) aus einer Mehrzahl von angetriebenen Sortierwalzen bestehen, welche zwischen den Antriebsriemen liegen und deren Längsachsen sich parallel zur Förderrichtung (5) erstrecken.

3. Sortiermaschine nach den Ansprüchen 1 und 2,
dadurch gekennzeichnet, daß das Verstellmittel (16) aus wenigstens einem, an dem verstellbaren Rahmen (12) beweglich angelenkten hydraulischem Linearantrieb (17) besteht, durch den der Rahmen (12) aus einer horizontalen in eine schräge Lage schwenkbar ist.
